# EUROPEAN PATENT SPECIFICATION

(11) **EP 4 278 157 B1**
(45) Date of publication and mention of the grant of the patent: **09.04.2025**
(21) Application number: 21705694.4
(22) Date of filing: 12.01.2021
(51) Int. Cl.: H01R 13/74, G01F 1/84, G01F 15/18, H01R 13/52, H01R 13/533

(54) **ELECTRICAL JUNCTION HAVING AN IMPROVED FEEDTHROUGH ELEMENT**
ELEKTRISCHE VERBINDUNG MIT VERBESSERTEM DURCHFÜHRUNGSELEMENT
JONCTION ÉLECTRIQUE DOTÉE D'UN ÉLÉMENT DE TRAVERSÉE ÉLECTRIQUE AMÉLIORÉ

(43) Date of publication of application: 22.11.2023
(73) Proprietor: Micro Motion, Inc., Boulder, CO 80301 (US)
(72) Inventor: SHANAHAN, Shaun E., Denver, Colorado 80211 (US); SKINKLE, David, Boulder, Colorado 80301 (US); JAMES, Clayton T., Longmont, Colorado 80501 (US); DESHPANDE, Atul Vasant, Pune, 411037 (IN)
(74) Representative: Ellis, Christopher Paul
(86) International application number: PCT/US2021/013021
(87) International publication number: WO 2022/154778

(56) References cited:
- EP-A1- 3 314 212
- WO-A1-2010/105654
- WO-A2-2016/115232
- US-A1- 2009 120 169
- US-A1- 2010 030 296
- US-B2- 8 852 775
- US-B2- 9 726 529

## Description

### FIELD OF THE INVENTION

The present invention relates to an electrical junction having an improved feedthrough element, and related methods.

### BACKGROUND OF THE INVENTION

Feedthroughs are used to connect conductive elements of two or more electrical devices. By way of example, where a first electrical device is located in a particular environment, such as, for example, a vacuum environment, a high or low temperature environment, or a particular gas environment, including, an explosive gas environment or a low or high moisture environment, and one or more other electrical device are located outside the particular environment of the first electrical environment. In such an example, one or more feedthroughs may be provided that connect the two or more electrical devices in a manner that permits isolation of the particular environment of the first electrical device. WO 2016/115232 A2, US 8 852 775 B2, US 2009/120169 Al disclose some examples of feedthroughs.

Vibrating conduit sensors, such as Coriolis mass flowmeters and vibrating densitometers, typically operate by detecting motion of a vibrating conduit that contains a flowing material, and often incorporate a feedthrough. Properties associated with the material in the conduit, such as mass flow, density and the like, can be determined by processing measurement signals received from motion transducers associated with the conduit. The vibration modes of the vibrating material-filled system generally are affected by the combined mass, stiffness and damping characteristics of the containing conduit and the material contained therein.

A typical Coriolis mass flowmeter includes one or more conduits that are connected inline in a pipeline or other transport system and convey material, e.g., fluids, slurries, emulsions, and the like, in the system. Each conduit may be viewed as having a set of natural vibration modes, including for example, simple bending, torsional, radial, and coupled modes. In a typical Coriolis mass flow measurement application, a conduit is excited in one or more vibration modes as a material flows through the conduit, and motion of the conduit is measured at points spaced along the conduit. Excitation is typically provided by an actuator, *e.g.,* an electromechanical device, such as a voice coil-type driver, that perturbs the conduit in a periodic fashion. Mass flow rate may be determined by measuring time delay or phase differences between motions at the transducer locations. Two such transducers (or pickoff sensors) are typically employed in order to measure a vibrational response of the flow conduit or conduits, and are typically located at positions upstream and downstream of the actuator. The two pickoff sensors are connected to electronic instrumentation. The instrumentation receives signals from the two pickoff sensors and processes the signals in order to derive a mass flow rate measurement, among other things. Vibratory flowmeters, including Coriolis mass flowmeters and densitometers, therefore employ one or more flow tubes that are vibrated in order to measure a fluid.

In some environments, electrical signals may need to be conducted through a flameproof physical barrier. For example, a flameproof physical barrier may separate the compartments of a fieldmount transmitter housing. Process control transmitters designed for use in hazardous atmospheres often utilize a combination of protection methods, including flameproof housings and/or barriers, to avoid uncontrolled explosions of flammable gases.

In order to provide electrical connectivity between the two compartments, a flameproof feedthrough may be employed. A common prior art flameproof feedthrough is a cemented joint bushing. In a cemented joint bushing, a cemented joint may be formed between the conductors and the bushing casing or a cemented joint may be formed between a conductor insulation layer and the bushing casing. In order to be approved as flameproof, joints must meet specific requirements, such as a temperature index rating and chemical compatibility, exceedingly tight tolerances (such as on the order of 0.1 or 0.15 millimeters, for example). Of course, not all feedthroughs are required to be flame or explosion-proof, depending on the application.

To permit connection of the one or more electrical devices, the feedthrough is provided with at least one conductive pin that extends through a header, which functions as a barrier between two sides of the conductive pin. Where the header is a conductive material, an insulating material may be located around the portion of the conductive pin that extends through the header in order to prevent an electrical current passing to the header or between the pins. Where the header is a non-conductive material, the header itself may function as an insulating material that prevents an electrical current from passing between the pins. In this manner, the first side of the conductive pin may connect to a conductive element, such as, for example, a wire or terminal, connected with a first electrical device and the second side connects to a conductive element connected with a second electrical device to provide an electrically conducting pathway between the first and second electrical devices.

A Coriolis flow meter is typically constructed with a secondary pressure vessel or case surrounding the primary flow path. The secondary volume must be sealed against moisture and contaminants. It is also desirable for the secondary volume to be capable of pressurization to delay or prevent external leakage. There is a need to pass electrical signals across this secondary boundary. This is typically done with a fused glass seal around pins or a cemented feedthrough as noted above. This approach is costly and requires wire wrapping to the pins. This wire is present during welding of the fused-glass assembly. Welding may damage the wrapped wire or the fused glass.

The present invention describes a feedthrough connector that allows over-molding a plastic body onto conductors that is subsequently snap-in installed. Features in some embodiments may include sealing mechanisms, anti-rotation mechanisms, and resistance to inward and outward loads. Furthermore, this feedthrough connector may be installed after welding, brazing, and other heat or chemical intensive processes are conducted.

### SUMMARY OF THE INVENTION

According to the invention, a feedthrough is adapted for use within a passage. The feedthrough comprises a body having a first interface region, and a second interface region, wherein the first interface region comprises a platform region. At least one electrical conductor extends through the body and out of the body to both the first interface region and the second interface region. A printed circuit board is attached to the platform region, and at least one pin hole is defined by the printed circuit board and configured to accept the at least one electrical conductor. A fastening region of the body comprises a first travel stop that engages a first shoulder defined by the passage, and prevents travel of the body in a first direction; and a barb configured to flex upon insertion of the body into the passage, and to engage a second shoulder defined by the passage when the body is fully inserted into the passage so to prevent travel of the body in a second direction.

According to an embodiment, a method for connecting a housing to a first component is provided. The method comprises the step of defining a feedthrough adapted for use within a passage comprising a body having a first interface region, and a second interface region, wherein the first interface region comprises a platform region.

At t least one electrical conductor is extended through the body and out of the body to both the first interface region and the second interface region. A printed circuit board is attached to the platform region. At least one electrical conductor is passed through a pin hole defined by the printed circuit board. The method comprises further the steps of forming a first travel stop in the body; engaging a first shoulder defined by the passage with the first travel stop such that travel of the body is prevented in a first direction; forming a barb in the body configured to flex upon insertion of the body into the passage; engaging a second shoulder defined by the passage with the barb when the body is inserted into the passage such that travel of the body in a second direction is prevented.

Preferably, the printed circuit board is fastened to the platform region with one or more rivets.

Preferably, the printed circuit board comprises headers soldered thereto that are diagonally oriented with respect to an edge of the printed circuit board.

Preferably, the body is formed of one or both of an electrical insulator material or a thermally-resistant material.

Preferably, the feedthrough comprises an indexing key molded into the body configured to engage a complementary space defined by the passage.

Preferably, the feedthrough comprises at least one seal circumscribing the body that engages an interior surface of the passage.

Preferably, the aperture is defined by an electrical housing, and wherein the feedthrough is secured to the electrical housing with at least one dowel.

Preferably, the method comprises the step of fastening the printed circuit board to the platform region with one or more rivets.

Preferably, the method comprises the steps of diagonally orienting headers with respect to an edge of the printed circuit board and soldering the headers to the printed circuit board.

Preferably, the body is formed of one or both of an electrical insulator material and a thermally-resistant material.

Preferably, the method comprises forming an indexing key on the body being configured to engage a complementary space defined by the passage.

Preferably, the method comprises circumscribing the body that engages an interior surface of the passage with at least one seal.

Preferably, the aperture is defined by a housing.

Preferably, the method comprises securing the feedthrough to the housing with at least one dowel.

### BRIEF DESCRIPTION OF THE DRAWINGS

The same reference number represents the same element on all drawings. The drawings are not necessarily to scale.
**FIG. 1** illustrates a vibratory flowmeter according to an embodiment of the invention;
**FIG. 2** illustrates an exploded perspective view of a feedthrough according to an embodiment;
**FIG. 3** illustrates a side view of a feedthrough according to an embodiment;
**FIG. 4** illustrates a sectional view of a feedthrough and passage according to an embodiment;
**FIG. 5** illustrates a sectional view of a feedthrough in a housing according to an embodiment;
**FIG. 6** illustrates a perspective view of a feedthrough in a housing according to an embodiment; and
**FIG. 7** illustrates a perspective view of a housing connected to a first component according to an embodiment.

### DETAILED DESCRIPTION

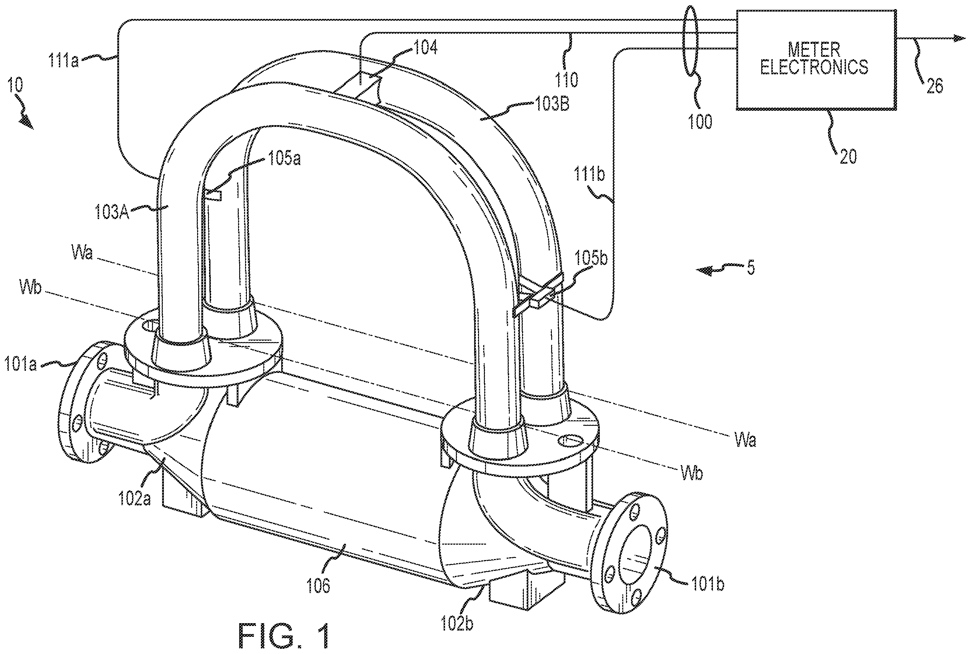

**FIG. 1** shows a vibratory flowmeter 5 according to the invention. The vibratory flowmeter 5 comprises a flowmeter assembly 10 and meter electronics 20. The meter electronics 20 is connected to the meter assembly 10 via leads 100 and is configured to provide measurements of one or more of a density, mass flow rate, volume flow rate, totalized mass flow, temperature, or other measurements or information over a communication path 26. It should be apparent to those skilled in the art that the vibratory flowmeter 5 can comprise any manner of vibratory flowmeter, regardless of the number of drivers, pick-off sensors, flow conduits, or the operating mode of vibration. In some embodiments, the vibratory flowmeter 5 can comprise a Coriolis mass flowmeter. In addition, it should be recognized that the vibratory flowmeter 5 can alternatively comprise a vibratory densitometer.

The flowmeter assembly 10 includes a pair of flanges 101a and 101b, manifolds 102a and 102b, a driver 104, pick-off sensors 105a and 105b, and flow conduits 103A and 103B. The driver 104 and the pick-off sensors 105a and 105b are connected to the flow conduits 103A and 103B.

The flanges 101a and 101b are affixed to the manifolds 102a and 102b. The manifolds 102a and 102b can be affixed to opposite ends of a spacer 106 in some embodiments. The spacer 106 maintains the spacing between the manifolds 102a and 102b in order to prevent pipeline forces from being transmitted to flow conduits 103A and 103B. When the flowmeter assembly 10 is inserted into a pipeline (not shown) which carries the flow fluid being measured, the flow fluid enters the flowmeter assembly 10 through the flange 101a, passes through the inlet manifold 102a where the total amount of flow fluid is directed to enter the flow conduits 103A and 103B, flows through the flow conduits 103A and 103B and back into the outlet manifold 102b, where it exits the meter assembly 10 through the flange 101b.

The flow fluid can comprise a liquid. The flow fluid can comprise a gas. The flow fluid can comprise a multi-phase fluid, such as a liquid including entrained gases and/or entrained solids.

The flow conduits 103A and 103B are selected and appropriately mounted to the inlet manifold 102a and to the outlet manifold 102b so as to have substantially the same mass distribution, moments of inertia, and elastic modulus about the bending axes Wa--Wa and Wb--Wb respectively. The flow conduits 103A and 103B extend outwardly from the manifolds 102a and 102b in an essentially parallel fashion.

The flow conduits 103A and 103B are driven by the driver 104 in opposite directions about the respective bending axes Wa and Wb and at what is termed the first out of phase bending mode of the vibratory flowmeter 5. The driver 104 may comprise one of many well-known arrangements, such as a magnet mounted to the flow conduit 103A and an opposing coil mounted to flow conduit 103B. An alternating current is passed through the opposing coil to cause both conduits to oscillate. A suitable drive signal is applied by the meter electronics 20 to the driver 104 via the lead 110. Other driver devices are contemplated and are within the scope of the description and claims.

The meter electronics 20 receives sensor signals on the leads 111a and 111b, respectively. The meter electronics 20 produces a drive signal on the lead 110 which causes the driver 104 to oscillate the flow conduits 103A and 103B. Other sensor devices are contemplated and are within the scope of the description and claims.

The meter electronics 20 processes the left and right velocity signals from the pick-off sensors 105a and 105b in order to compute a flow rate, among other things. The communication path 26 provides an input and an output means that allows the meter electronics 20 to interface with an operator or with other electronic systems. The description of FIG. 1 is provided merely as an example of the operation of a Coriolis flowmeter and is not intended to limit the teaching of the present invention.

The meter electronics 20 in one embodiment is configured to vibrate the flowtubes 103A and 103B. The vibration is performed by the driver 104. The meter electronics 20 further receives resulting vibrational signals from the pickoff sensors 105a and 105b. The vibrational signals comprise vibrational responses of the flowtubes 103A and 103B. The meter electronics 20 processes the vibrational responses and determines a response frequency and/or phase difference. The meter electronics 20 processes the vibrational response and determines one or more flow measurements, including a mass flow rate and/or density of the flow fluid. Other vibrational response characteristics and/or flow measurements are contemplated and are within the scope of the description and claims.

In one embodiment, the flowtubes 103A and 103B comprise substantially U-shaped flowtubes, as shown. Alternatively, in other embodiments, the flowtubes can comprise substantially straight flowtubes or can comprise one or more flowtubes of curved shapes other than U-shaped flowtubes. Additional flowmeter shapes and/or configurations can be used and are within the scope of the description and claims.

Those of ordinary skill in the art will appreciate that the description of FIG. 1 is provided merely as an example of the operation of one possible vibrating flow device and is not intended to limit the teaching of the present invention. Those of ordinary skill in the art will appreciate that it is within the scope of the present invention to use the principles discussed herein in conjunction with any type of vibrating flow device, including, for example, densitometers, regardless of the number of conduits, the number of drivers, the number of pick-offs, the operating mode of vibration or the determined characteristic of the flowing substance. Furthermore, those of ordinary skill in the art will appreciate that it is within the scope of the present invention to provide a vibrating flow device that includes one or more resistance temperature devices ("RTDs"). Moreover, although the conduits 103A, 103 B are shown provided with a generally U-shape, it is within the scope of the present invention to provide the conduits 103A, 103B with other shapes, such as, for example, straight or irregular shapes. Additionally, although in the present example, the drive mode is described as being the bending mode, it is within the scope of the present invention to utilize other drive modes.

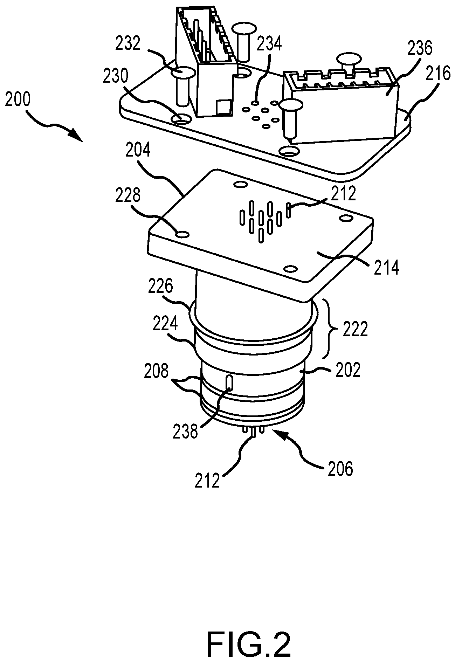

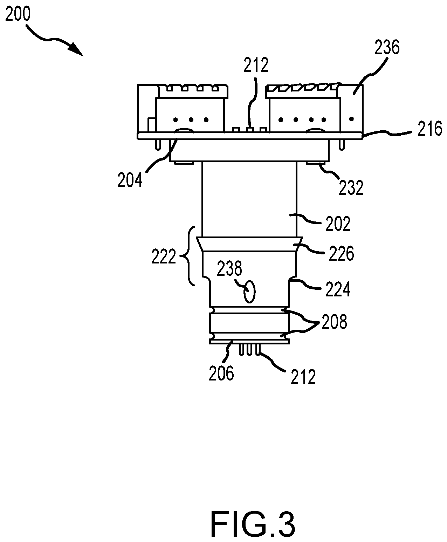

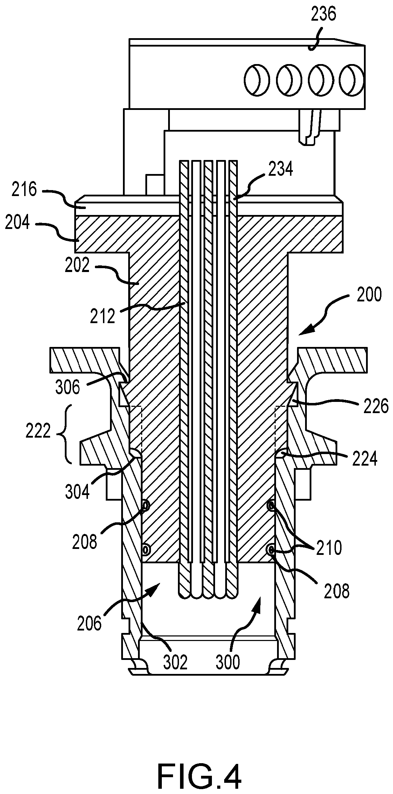

**FIGS. 2****,** **3****,** and **4** show a feedthrough 200 according to an embodiment of the invention. The passage 300 and related features are only illustrated in FIG. 4. The feedthrough 200 comprises an electrical feedthrough that permits the exchange of electrical signals and/or electrical power to opposing sides of the feedthrough 200. In particular, the feedthrough 200 permits electrical signals to be exchanged between a first interface region 204 and a second interface region 206. However, the feedthrough 200 does not permit gasses, liquids, or other materials to pass between the first interface region 204 and the second interface region 206. The feedthrough 200 is preferably connected to a vibratory flowmeter 5. In an embodiment, the feedthrough 200 is attached directly to the vibratory flowmeter 5. In another embodiment, the feedthrough 200 is attached remotely to the vibratory flowmeter 5. Although described in the context of a vibratory flowmeter 5, the feedthrough 200 may be associated with electronic devices and housings that are not related to flowmeters.

The feedthrough 200 comprises a flameproof feedthrough in some embodiments. Consequently, the feedthrough 200 may be designed to conform to applicable flameproof standards. In a flameproof embodiment, a flame is not permitted to pass through the feedthrough 200. As a result, ignition on one side of the feedthrough 200 does not result in ignition on the other side of the feedthrough 200.

The feedthrough 200 comprises an explosion-proof feedthrough in some embodiments. The feedthrough 200 may be designed to conform to applicable explosion-proof standards. In an explosion-proof embodiment, the feedthrough 200 does not allow passage of gas, liquid, or other materials in the event of an explosion on either side of the feedthrough 200. The feedthrough 200 may be constructed to contain a pressure spike up to a predetermined pressure threshold.

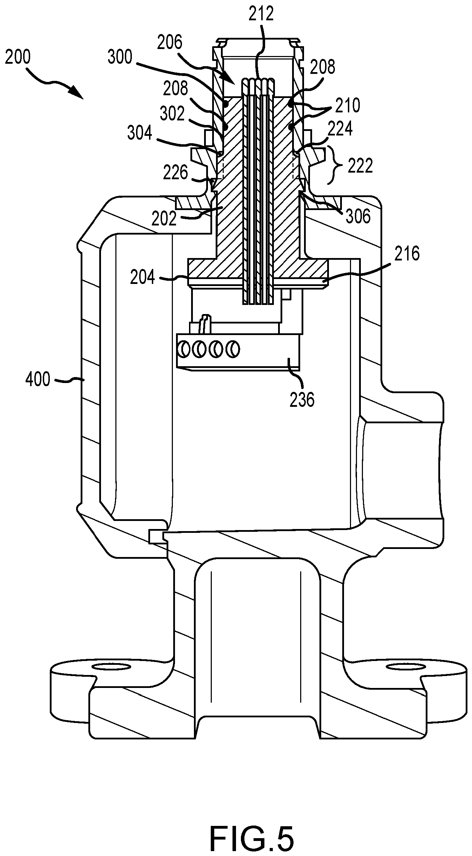

The feedthrough 200 comprises a body 202. The body 202 may be substantially cylindrical in some embodiments, but it should be understood that other cross-sectional shapes may be used. A seal groove 208 may be formed in the exterior surface of the body 202 and may be configured to receive a seal 210 (see FIGS. 4 and 5). It should be understood that the seal groove 208 may be located at any desired position on the body 202, and there may be only a single seal groove 208 or more than one seal groove 208, as illustrated.

The feedthrough 200 is installed in a passage 300 (see FIG. 4) that is defined by a body in which it is installed. The passage 300 may be uniform or may have portions of different shapes and/or diameters. The passage 300 may be straight or may include turns or bends.

The body 202 may be formed of an electrical insulator material and/or formed of a thermally-resistant material. The body 202 may comprise a non-flammable or flame or heat-resistant material. The body 202 substantially blocks the passage 300. In some embodiments, any gaps between the body 202 and the interior surface 302 of the passage 300 are of a gap depth and/or gap length that is less than a depth and/or length that will allow a flame to pass through the passage 300. In some embodiments, therefore, the gap depth and gap length conform to applicable flameproof standards.

In one embodiment, the body 202 is formed of plastic or similar polymer. In some embodiments, the body 202 is formed of a metal. Where the body 202 is formed of a plastic or similar polymer, the plastic or similar polymer may be inserted into the passage 300 in a liquid or semi-liquid state and allowed to cool, such that the body 202 substantially conforms to the interior surface of the passage 300. As a result, a gap between the body 202 and the interior surface of the passage 300 will be minimized. As a result, the gap between the body 202 and the interior surface of the passage 300 will be minimal enough so that the feedthrough 200 will be one or both of flameproof or explosion-proof. The material may have added components/composites for desired properties and strength characteristics, as will be understood by those skilled in the art.

In another embodiment, the body 202 is formed outside the passage 300 to predetermined dimensions. Examples, without limitation, include molding, additive manufacturing, and/or subtractive manufacturing techniques that will be known to those skilled in the art.

The body 202 is generally formed so that there is a minimal gap depth between the body 202 and the interior surface of the passage 300. The body 202 is formed so that a gap depth between the body 202 and the interior surface of the passage 300 is less than a predetermined maximum gap threshold. The predetermined maximum gap threshold may comprise a gap depth that is prescribed by an applicable flameproof standard. The predetermined maximum gap threshold may comprise a gap depth that is prescribed by an applicable explosion-proof standard. Compliance with a flame-proof and/or explosion-proof standard may require maintaining a small gap depth, a long flame path length, or both.

The feedthrough 200 further includes one or more conductors 212 extending through the body 202. The one or more conductors 212 comprise any manner of electrical conductors. The one or more conductors 212 can comprise wires, cables, pins, shaped tongues, conductive tubes, or any other desired conductor or conductor configuration. The one or more conductors 212 extend out of both sides of the body 202 and extend at least partially to both the first interface region 204 and the second interface region 206. The one or more conductors 212 may transmit electrical signals between the first interface region 204 and the second interface region 206. The one or more conductors 212 may transmit electrical power between the first interface region 204 and the second interface region 206.

The ends of the one or more conductors 212 are available at the first interface region 204 and the second interface region 206 and may be exposed to be electrically contacted or coupled. The first interface region 204 may comprise a platform region 214. The platform region 214 provides an interface that accepts an electronics device or connector. In an embodiment, the electronics device is a printed circuit board (PCB) 216.

In an embodiment, a first electrical connector (or similar device) may be assembled or affixed to the ends of the one or more conductors 212 available at the first interface region 204. A second electrical connector (or similar device) may be assembled or affixed to the ends of the one or more conductors 212 available at the second interface region 206.

In some embodiments, a fastening region 222 comprises a first travel stop 224 and a barb 226. The first travel stop 224 is a region of the body 202 having a larger diameter than a more distal portion of the body 202, such that the first travel stop 224 may interface with a first shoulder 304 defined by the passage 300 and prevent the feedthrough 200 from travel beyond the point of travel stop 224 and first shoulder 304 engagement.

The barb 226 is a projection that may compress or otherwise deflect and allows the body 202 to be placed into the passage. However, once the body 202 is fully inserted into the passage 300, the barb 226 may decompress or otherwise return to a post-deflection resting position (or partially deflected position) and engage a second shoulder 306 defined by the passage 300. The barb 226 and second shoulder 306 engagement prevents the feedthrough 200 from travelling the direction from which it was inserted into the passage 300. This will generally be an irreversible insertion, but in embodiments, a predetermined force may disengage the body 202 from the passage 300. In some embodiments a mechanism (not shown) may be present to compress the barb 226 to effectuate removal of the body 202 from the passage 300.

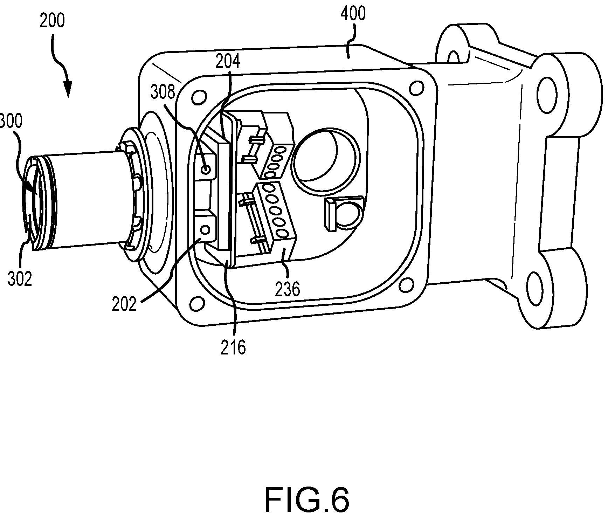

In some embodiments, the barb 226 is not present, and the body 202 is secured in the passage 300 with a fastener 308, adhesive, or simply an interference fit. The interference fit may be between the body 202 and the passage 300 and/or one or more seals 210 and the passage 300. **FIG. 6****,** for example, shows an embodiment where the fastener 308 comprises pins that engage the body 202 to prevent unwanted removal of the body 202 from the passage 300. In a related embodiment, a channel (not shown) may be present in the body 202 that accepts pins or other styles of fasteners 308.

The platform region 214 may comprise means to attach the PCB 216. In an embodiment, holes 228 defined by the platform region 214 align with holes 230 on the PCB 216. Fasteners 232 inserted through both sets of holes 228, 230 may attach the PCB 216 to the platform region 214. The fastener may comprise a rivet, bolt, or any other mechanical fastener known in the art. The holes 228 in the platform region 214 may have a smooth internal bore or may be threaded to accept a mating fastener 232. The PCB may also be adhered to the platform region 214.

The PCB 216 may comprise pin holes 234 arranged to accept the conductors 212. Upon attaching the PCB 216 to the platform region 214, the conductors 212 may be soldered to the PCB 216. Conductive traces (not shown) may surround the pin holes 214 on the PCB 216. This places the conductors 212 in electrical continuity with components 236 on the PCB 216. This scheme allows a number of different PCB 212 configurations, each having the same pin hole arrangement, to be available during assembly that may be chosen based on application considerations. In an embodiment, a component 236 on the PCB 216 may be a header.

In an embodiment, an indexing key 238 is provided on the body 202 that engages a complementary space defined by the passage 300. This indexes the body 202 in a particular orientation and prevents rotation of the body 202 within the passage 300.

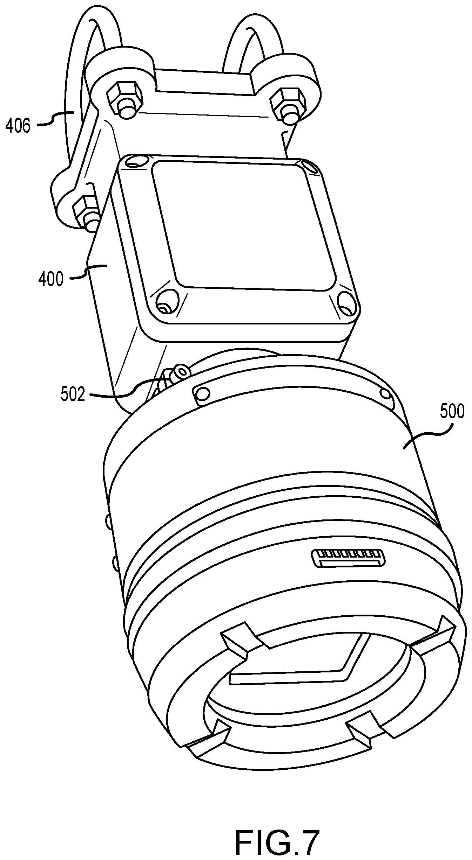

**FIGS. 5-7** illustrate an electrical housing 400 that comprises the passage 300, in which the body 202 is installed. In an embodiment, the passage 300 may be defined by a body 402 of the housing 400. In an embodiment, the passage 300 may be defined by a bung that is attached to the body 402 of the housing 400. In either case, an exterior region 240 of the feedthrough 200 provides an interface such that a first component 500 (see FIG. 7) may be removably and positionably affixed to the housing 400. The first component 500 may be removably affixed to the housing 400, wherein the first component 500 can rotate or can be rotatably positioned with respect to the feedthrough 200. In an embodiment, the feedthrough 200 creates an attachment interface with the first component 500. In an embodiment, the feedthrough 200 creates a rotatable attachment interface with the second component 500. For example, the feedthrough 200 can be used to mount a transmitter of a Coriolis flowmeter 5 to a flowmeter assembly or housing in some applications. However, it should be understood that other uses and applications of the feedthrough 200 are contemplated and are within the scope of the description and claims.

In alternate embodiments a portion of a flowmeter 5 or other electrical device may define the passage 300, in which the body 202 is installed. In alternate embodiments, a portion of a flowmeter 5 or other electrical device may define the housing 400.

The feedthrough 200 may be permanently or removably affixed to the first component 500. The feedthrough 200 may be affixed to the first component 500 in any suitable manner. The feedthrough 200 may be affixed to the first component 500 by a clamp 502 or other hardware.

In an embodiment where at least one of the components 236 on the PCB 216 is a header, the header or headers are soldered to the PCB 216, such that the headers are diagonally oriented with respect to an edge of the PCB 216. This allows tool access to the headers when accessed in an installed position yet allows a smaller PCB 216 footprint than if the headers were orthogonally oriented with respect to an edge of the PCB 216.

According to an embodiment of the present embodiment, the feedthrough 200 is configured to connect the one or more electronics 20 in communication with the pick-offs 105a, 105b and the driver 104. According to another embodiment of the present embodiment, the feedthrough 200 is configured such that conductors 212 are connected, whether directly or indirectly, from one or more meter electronics 20, to one or more flowmeter components, such as the driver 104, the pickoffs 105a, 105b, and other components such as temperature sensors (not shown).

The feedthrough 200 may be further connected with a conduit (not shown) which receives the conductors 212 connected with one or more electronics 20. The conduit may connect to the feedthrough 200. Also, the conduit may, via the opposite end, connect to a variety of structures, including, for example, a second feedthrough 200, a housing 400 or other junction box, or additional meter electronics 20.

Holes on the housing 400 may accept fasteners 406 to mount the housing to a structure, such as a pipe, wall, or other surface. In FIG. 7, U-bolts are the fasteners 406 illustrated. However, bolts, screws, and other hardware is contemplated, and this will be well understood by those skilled in the art. U-bolts allow the housing to be installed on either horizontal or vertical pipes, yet the orientation may remain the same, by arranging the U-bolts accordingly. Holes on the housing 400 may be oriented as shown, or instead or in addition to, may also be disposed elsewhere on the housing 400, and/or on flanges or protrusions of the housing adapted for alternative mounting schemes (not illustrated).

The present description depicts specific examples to teach those skilled in the art how to make and use the best mode of the invention. For the purpose of teaching inventive principles, some conventional aspects have been simplified or omitted. Those skilled in the art will appreciate variations from these examples that fall within the scope of the invention as defined by the appended claims.

The detailed descriptions of the above embodiments are not exhaustive descriptions of all embodiments contemplated by the inventors to be within the scope of the invention as defined by the appended claims.

Indeed, persons skilled in the art will recognize that certain elements of the above-described embodiments may variously be combined or eliminated to create further embodiments, and such further embodiments fall within the scope and teachings of the invention as defined by the appended claims.

It will also be apparent to those of ordinary skill in the art that the above-described embodiments may be combined in whole or in part to create additional embodiments within the scope and teachings of the invention as defined by the appended claims.

Accordingly, the scope of the invention is determined from the following claims.

## Claims

1. A feedthrough (200) adapted for use within a passage (300), comprising:
a body (202) having a first interface region (204), and a second interface region (206), wherein the first interface region (204) comprises a platform region (214);
at least one electrical conductor (212) that extends through the body (202) and out of the body (202) to both the first interface region (204) and the second interface region (206);
a printed circuit board (216) attached to the platform region (214);
at least one pin hole (234) defined by the printed circuit board (216) configured to accept the at least one electrical conductor (212); **characterized by**:
a fastening region (222) of the body (202) comprising:
a first travel stop (224) that engages a first shoulder (304) defined by the passage (300), and prevents travel of the body (202) in a first direction; and
a barb (226) configured to flex upon insertion of the body (202) into the passage (300), and to engage a second shoulder (306) defined by the passage (300) when the body (202) is fully inserted into the passage (300) so to prevent travel of the body (202) in a second direction.

2. The feedthrough (200) of claim 1, wherein the printed circuit board (216) is fastened to the platform region (214) with one or more rivets.

3. The feedthrough (200) of claim 1, wherein the printed circuit board (216) comprises headers (236) soldered thereto that are diagonally oriented with respect to an edge of the printed circuit board (216).

4. The feedthrough (200) of claim 1, wherein the body (202) is formed of one or both of an electrical insulator material or a thermally-resistant material.

5. The feedthrough (200) of claim 1, comprising an indexing key molded into the body configured to engage a complementary space defined by the passage (300).

6. The feedthrough (200) of claim 1, comprising at least one seal (210) circumscribing the body (202) that engages an interior surface (302) of the passage (300).

7. The feedthrough (200) of claim 1, wherein the aperture is defined by an electrical housing, and wherein the feedthrough (200) is secured to the electrical housing (400) with at least one dowel (308).

8. A method for connecting a housing to a first component, comprising the steps of:
defining a feedthrough adapted for use within a passage comprising a body having a first interface region, and a second interface region, wherein the first interface region comprises a platform region;
extending at least one electrical conductor through the body and out of the body to both the first interface region and the second interface region;
attaching a printed circuit board to the platform region;
passing at least one electrical conductor through a pin hole defined by the printed circuit board; **characterized by**:
forming a first travel stop in the body;
engaging a first shoulder defined by the passage with the first travel stop such that travel of the body is prevented in a first direction;
forming a barb in the body configured to flex upon insertion of the body into the passage;
engaging a second shoulder defined by the passage with the barb when the body is inserted into the passage such that travel of the body in a second direction is prevented.

9. The method of claim 8, comprising the step of fastening the printed circuit board to the platform region with one or more rivets.

10. The method of claim 8, comprising the steps of:
diagonally orienting headers with respect to an edge of the printed circuit board; and
soldering the headers to the printed circuit board.

11. The method of claim 8, wherein the body is formed of one or both of an electrical insulator material and a thermally-resistant material.

12. The method of claim 8, comprising the step of forming an indexing key on the body being configured to engage a complementary space defined by the passage.

13. The method of claim 8, comprising the step of circumscribing the body that engages an interior surface of the passage with at least one seal.

14. The method of claim 8, wherein the aperture is defined by a housing.

15. The method of claim 8 comprising the step of securing the feedthrough to the housing with at least one dowel.

## Patentansprüche

1. Eine Durchführung (200), die zur Verwendung innerhalb eines Durchgangs (300) angepasst ist, umfassend:
einen Körper (202), der eine erste Grenzflächenregion (204) und eine zweite Grenzflächenregion (206) aufweist, wobei die erste Grenzflächenregion (204) eine Plattformregion (214) umfasst;
mindestens einen elektrischen Leiter (212), der sich durch den Körper (202) und aus dem Körper (202) heraus sowohl zur ersten Grenzflächenregion (204) als auch zur zweiten Grenzflächenregion (206) erstreckt;
eine Leiterplatte (216), die an die Plattformregion (214) angefügt ist;
mindestens ein Stiftloch (234), das durch die Leiterplatte (216) definiert wird und dazu konfiguriert ist, den mindestens einen elektrischen Leiter (212) aufzunehmen; **gekennzeichnet durch**:
eine Befestigungsregion (222) des Körpers (202), umfassend:
eine erste Bewegungssperre (224), die eine erste durch den Durchgang (300) definierte Schulter (304) in Eingriff nimmt und eine Bewegung des Körpers (202) in einer ersten Richtung verhindert; und
einen Widerhaken (226), der dazu konfiguriert ist, sich bei Einführung des Körpers (202) in den Durchgang (300) zu biegen und eine zweite durch den Durchgang (300) definierte Schulter (306) in Eingriff zu nehmen, wenn der Körper (202) vollständig in den Durchgang (300) eingeführt ist, um so eine Bewegung des Körpers (202) in einer zweiten Richtung zu verhindern.

2. Durchführung (200) nach Anspruch 1, wobei die Leiterplatte (216) an der Plattformregion (214) mit einer oder mehreren Nieten befestigt ist.

3. Durchführung (200) nach Anspruch 1, wobei die Leiterplatte (216) an ihr angelötete Steckleisten (236) umfasst, die diagonal in Bezug auf einen Rand der Leiterplatte (216) orientiert sind.

4. Durchführung (200) nach Anspruch 1, wobei der Körper (202) aus einem oder beiden von einem elektrischen Isolatormaterial oder einem thermisch beständigen Material gebildet ist.

5. Durchführung (200) nach Anspruch 1, die einen Indexierungskeil umfasst, der in den Körper eingeformt ist und dazu konfiguriert ist, einen durch den Durchgang (300) definierten komplementären Raum in Eingriff zu nehmen.

6. Durchführung (200) nach Anspruch 1, die mindestens eine Dichtung (210) umfasst, die den Körper (202) abgrenzt, der eine innere Oberfläche (302) des Durchgangs (300) in Eingriff nimmt.

7. Durchführung (200) nach Anspruch 1, wobei die Öffnung durch ein elektrisches Gehäuse definiert wird und wobei die Durchführung (200) an dem elektrischen Gehäuse (400) mit mindestens einem Zylinderstift (308) gesichert ist.

8. Ein Verfahren zum Verbinden eines Gehäuses mit einer ersten Komponente, das die folgenden Schritte umfasst:
Definieren einer Durchführung, die zur Verwendung innerhalb eines Durchgangs angepasst ist und einen Körper umfasst, der eine erste Grenzflächenregion und eine zweite Grenzflächenregion aufweist, wobei die erste Grenzflächenregion eine Plattformregion umfasst;
Erstrecken mindestens eines elektrischen Leiters durch den Körper und aus dem Körper heraus sowohl zur ersten Grenzflächenregion als auch zur zweiten Grenzflächenregion;
Anfügen einer Leiterplatte an die Plattformregion;
Durchstecken mindestens eines elektrischen Leiters durch ein Stiftloch, das durch die Leiterplatte definiert wird; **gekennzeichnet durch**:
Bilden einer ersten Bewegungssperre in dem Körper;
Ineingriffnehmen einer ersten durch den Durchgang definierten Schulter mit der ersten Bewegungssperre, sodass eine Bewegung des Körpers in einer ersten Richtung verhindert wird;
Bilden eines Widerhakens in dem Körper, der dazu konfiguriert ist, sich bei Einführung des Körpers in den Durchgang zu biegen;
Ineingriffnehmen einer zweiten durch den Durchgang definierten Schulter mit dem Widerhaken, wenn der Körper in den Durchgang eingeführt ist, sodass eine Bewegung des Körpers in einer zweiten Richtung verhindert wird.

9. Verfahren nach Anspruch 8, das den Schritt des Befestigens der Leiterplatte an der Plattformregion mit einer oder mehreren Nieten umfasst.

10. Verfahren nach Anspruch 8, das die folgenden Schritte umfasst:
diagonales Orientieren von Steckleisten in Bezug auf einen Rand der Leiterplatte; und
Anlöten der Steckleisten an der Leiterplatte.

11. Verfahren nach Anspruch 8, wobei der Körper aus einem oder beiden von einem elektrischen Isolatormaterial und einem thermisch beständigen Material gebildet ist.

12. Verfahren nach Anspruch 8, das den Schritt des Bildens eines Indexierungskeils auf dem Körper umfasst, der dazu konfiguriert ist, einen durch den Durchgang definierten komplementären Raum in Eingriff zu nehmen.

13. Verfahren nach Anspruch 8, das den Schritt des Abgrenzens des Körpers, der eine innere Oberfläche des Durchgangs in Eingriff nimmt, mit mindestens einer Dichtung umfasst.

14. Verfahren nach Anspruch 8, wobei die Öffnung durch ein Gehäuse definiert wird.

15. Verfahren nach Anspruch 8, das den Schritt des Sicherns der Durchführung an dem Gehäuse mit mindestens einem Zylinderstift umfasst.

## Revendications

1. Traversée (200) conçue pour être utilisée dans un passage (300), comprenant :
un corps (202) comportant une première région interface (204) et une seconde région interface (206), la première région interface (204) comprenant une région plateforme (214) ;
au moins un conducteur électrique (212) qui s'étend dans le corps (202) et hors du corps (202) jusqu'à la première région interface (204) et la seconde région interface (206) ;
une carte de circuit imprimé (216) fixée à la région plateforme (214) ;
au moins une piqûre (234) définie par la carte de circuit imprimé (216) et configuré pour accepter l'au moins un conducteur électrique (212) ; la traversée étant **caractérisée par** :
une région de fixation (222) du corps (202) comprenant :
une première butée de déplacement (224) qui s'engage dans un premier épaulement (304) défini par le passage (300) et qui empêche le déplacement du corps (202) dans une première direction ; et
une cannelure (226) configurée pour fléchir lors de l'insertion du corps (202) dans le passage (300) et pour s'engager dans un second épaulement (306) défini par le passage (300) lorsque le corps (202) est complètement inséré dans le passage (300) afin d'empêcher le déplacement du corps (202) dans une seconde direction.

2. Traversée (200) selon la revendication **1,** dans laquelle la carte de circuit imprimé (216) est fixée à la région plateforme (214) à l'aide d'un ou plusieurs rivets.

3. Traversée (200) selon la revendication 1, dans laquelle la carte de circuit imprimé (216) comprend des barrettes (236) soudées à celle-ci qui sont orientées en diagonale par rapport à un bord de la carte de circuit imprimé (216).

4. Traversée (200) selon la revendication 1, dans laquelle le corps (202) est constitué d'un matériau électro-isolant et/ou d'un matériau résistant à la chaleur.

5. Traversée (200) selon la revendication 1, comprenant une clé d'indexation moulée dans le corps et configurée pour s'engager dans un espace complémentaire défini par le passage (300).

6. Traversée (200) selon la revendication 1, comprenant au moins un joint (210) entourant le corps (202) et s'engageant dans une surface intérieure (302) du passage (300).

7. Traversée (200) selon la revendication 1, l'ouverture étant définie par un boîtier électrique et la traversée (200) étant fixée au boîtier électrique (400) à l'aide d'au moins une cheville (308).

8. Procédé de connexion d'un boîtier à un premier composant, comprenant les étapes consistant à :
définir une traversée conçue pour être utilisée à l'intérieur d'un passage comprenant un corps comportant une première région interface et une seconde région interface, la première région interface comprenant une région plateforme ;
étendre au moins un conducteur électrique dans le corps et hors du corps jusqu'à la première région interface et la seconde région interface ;
fixer une carte de circuit imprimé à la région plateforme ;
faire passer au moins un conducteur électrique par une piqûre définie par la carte de circuit imprimé ; le procédé étant **caractérisé par** les étapes consistant à :
former une première butée de déplacement dans le corps ;
engager la première butée de déplacement dans un premier épaulement défini par le passage de manière à empêcher le déplacement du corps dans une première direction ;
former dans le corps une cannelure configurée pour fléchir lors de l'insertion du corps dans le passage ;
engager la cannelure dans un second épaulement défini par le passage lorsque le corps est inséré dans le passage de manière à empêcher le déplacement du corps dans une seconde direction.

9. Procédé selon la revendication 8, comprenant l'étape consistant à fixer la carte de circuit imprimé à la région plateforme à l'aide d'un ou plusieurs rivets.

10. Procédé selon la revendication 8, comprenant les étapes consistant à :
orienter des barrettes en diagonale par rapport à un bord de la carte de circuit imprimé ; et
souder les barrettes à la carte de circuit imprimé.

11. Procédé selon la revendication 8, dans lequel le corps est constitué d'un matériau électro-isolant et/ou d'un matériau résistant à la chaleur.

12. Procédé selon la revendication 8, comprenant l'étape consistant à former sur le corps une clé d'indexation configurée pour s'engager dans un espace complémentaire défini par le passage.

13. Procédé selon la revendication 8, comprenant l'étape consistant à entourer le corps à l'aide d'au moins un joint qui s'engage dans une surface intérieure du passage.

14. Procédé selon la revendication 8, dans lequel l'ouverture est définie par un boîtier.

15. Procédé selon la revendication 8, comprenant l'étape consistant à fixer la traversée au boîtier à l'aide d'au moins une cheville.
